# NEW EUROPEAN PATENT SPECIFICATION

(11) **EP 0 564 584 B2**
(45) Date of publication and mention of the opposition decision: **20.04.2005**
(45) Mention of the grant of the patent: 14.07.1999
(21) Application number: 92903626.7
(22) Date of filing: 24.12.1991
(51) Int. Cl.: C08J 9/12, B60R 22/14

(54) **SIDE IMPACT BOLSTER FOR ATOMOTIVE APPLICATIONS COMPRISING ENERGY ABSORBING, WATER BLOWN, RIGID POLYURETHANE FOAM**
POLSTER ZUR ABFEDERUNG SEITLICHER STÖSSE IM AUTOMOBILBEREICH ENTHALTEND MIT WASSER GESCHÄUMTEN, ENERGIE-ABSORBIERENDER POLYURETHANE-SCHAUM
COUSSIN AMORTISSEUR POUR CHOCS LATERAUX POUR VEHICULES COMPRENANT UNE MOUSSE POLYURETHANE RIGIDE ABSORBANT L'ENERGIE, GONFLEE PAR DE L'EAU

(30) Priority: 27.12.1990 US 634643
(43) Date of publication of application: 13.10.1993
(73) Proprietor: BASF CORPORATION, Parsippany, New Jersey 07054 (US)
(72) Inventor: ROSSIO, Richard, C., Troy, MI 48083 (US); EASTERLE, Mark, Alan, Rochester, MI 48037 (US); JACKSON, Michael, Lon, Allen PArk, MI 48101 (US)
(74) Representative: Meyer, Udo
(86) International application number: PCT/US1991/009661
(87) International publication number: WO 1992/012197

(56) References cited:
- US-A- 4 134 610
- US-A- 4 883 825
- US-A- 4 970 243

## Description

### Field of the Invention

The invention relates to side impact bolster for automotive applications comprising energy absorbing rigid polyurethane foams. Specfically these foams are low density, predominantly open celled, water blown rigid polyurethane foams which exhibit minimal spring back or hysteresis characteristics. Such foams are suitable as side impact bolsters in automoblle doors as lightweight alternatives for traditional energy absorbing applications. The foams of the present invention exhibit properties comparable to energy absorbing foams using chlorinated fluorocarbons as the blowing agent.

### Description of the Related Art

U.S. Patent No. 4,866,102 describes moldable energy absorbing rigid polyurethane foam compositions which are prepared by the reaction of a graft polymer dispersion in a polyoxyalkylene polyether polyol with an alkylene oxide adduct of toluenediamine or diaminodiphenylmethane with an organic polyisocyanate in the presence of a crosslinking agent. Similarly, U.S. Patents 4,116,893; 4,190,712; 4,212,954; and 4,282,330 also describe energy absorbing foams utilizing graft polymer dispersions. U.S. Patent No. 4,722,946 describes the production of energy attenuating viscoelastic polyurethane elastomers and foams, comprising mixtures of linear and branched polyol intermediates, polyisocyanates, and optionally, extenders, and blowing agents, in the presence of a catalyst whereby the isocyanate index is varied from about 65 to about 85. U.S. Patent No. 4,644,563 describes a method of shoring a geological formation which comprises preparing a rigid polyurethane foam which exhibits nearly constant strain with increasing stress in compression. U.S. Patent No. 4,696,954 describes the preparation of molded polyurethane foams characterized by high impact strength and good thermal stability. U.S. Patent No. 4,614,754 describes a high density rigid polyurethane foam which exhibits nearly constant strain with increasing stress in compression. U.S. Patent No. 4,585,807 describes rigid polyurethane foams employing oxyalkylated ethylenediamine.

### Summary of the Invention

The present invention relates to side impact bolster for automotive applications comprising energy absorbing rigid polyurethane foams and the process for preparing side impact bolster for automotive applications comprising said foams. The foams of the present invention are predominantly open celled, energy absorbing, rigid polyurethane foams essentially free of chlorinated fluorocarbons and volatile organic carbon blowing agents. Yet the foams of the present invention have characteristics, such as relatively constant crush strength and minimal spring back or hysteresis, comparable to presentday energy absorbing rigid polyurethane foams containing fluorocarbons and volatile organic carbons.

### Detailed Description of the Invention

Under ever increasing governmental regulations addressing both personal safety and environmental concerns auto manufacturers have been put in a position where they must meet stringent impact requirements, maintain vehicle weight and reduce the use of materials having a detrimental effect on the environment. Energy absorbing rigid polyurethane foams have provided a partial solution in some impact performance requirements areas; eg. energy absorbing fillers which can be used to stiffen door support frames, thus aiding in preserving the structural integrity of the passenger compartment of an automobile or as bolsters which can reduce effects of secondary collision (occupant-to-interior). However, the foams exhibiting the desired impact characteristics utilize chlorinated fluorocarbons as the foaming agent. That fact alone reduces their desirability in light of mandates to reduce and eventually eliminate the use of CFC's.

In the instant invention it has been found that side impact bolster for automotive applications comprising certain water blown rigid polyurethane foams can be produced, wherein the foams exhibit energy absorbing characteristics comparable to the CFC blown rigid polyurethane foams.

These foams are open celled; having molded densities ranging of from 32 kg/m³ to 72 kg/m³ (2.0 pcf to 4.5 pcf), and a crush strength (compressive strength) which increases constantly from 10% to 70% deflection in loading of up to 48,3 N/cm² (70 psi).

Previously, the foams exhibiting the desired impact characteristics utilized chlorinated fluorocarbons as the foaming agent. Attempts to substitute water into these formulations failed to produce foams exhibiting the same impact characteristics. Some success has been had with certain narrowly defined formulations using water as the blowing agent, and containing a polymer polyol (graft polyol) as necessary elements of the invention. (See co-pending application U.S. Serial No. 634,643 filed December 27, 1990, also U.S. Patent Nos. 4,190,712; 4,212,954 and 4,116,893).

Surprisingly, it has now been found that foams exhibiting the desired energy absorbing characteristics may be produced from active hydrogen containing compounds or mixtures thereof, organic isocyanates, water, and additives with the proviso that such compounds are generally capable of forming a rigid polyurethane structure, the critical nature of the invention being the amount of water used in conjunction with the isocyanate and resin portions of a given rigid polyurethane foam formulation. The water must be present in amounts sufficient to act as a blowing agent and a cell opening agent promoting a predominantly open cell structure, yet not be present in amounts great enough to cause the foamy to collapse. The amount of water used is highly dependent upon the other formulation components but it has been found that from about 2 weight percent to about 30 weight percent is an effective range. A preferred range of water being from about 6 weight percent to about 15 weight percent.

The polyisocyanates for use in the present invention are selected from 4,4'-diphenylmethane diisocyanate, mixtures of 4,4'- and 2,4'-diphenylmethane diisocyanate, polymethylene polyphenylene polyisocyanate, modified polymethylene polyphenylene polyisocyanate and mixtures thereof. Such polyisocyanates may be mixed with minor amounts of other polyisocyanates. Such additional polyisocyanates may be modified or unmodified and are well known to those skilled in the art.

For the purposes of this invention the term polyisocyanate is used to describe compounds containing, at least two isocyanate groups. Unmodified polyisocyanates include aliphatic or cycloaliphatic and aromatic polyisocyanates. Examples include 2,4- and 2,6-methylcyclohexylenediisocyanate; tetramethylene diisocyanate, cyclohexane diisocyanate, 2,4-toluene diisocyanate, 2,6-toluene diisocyanate, mixtures of 2,4-and 2,6-toluene diisocyanate, naphthalene-1,5-diisocyanate, 1-methoxyphenyl-2,4-diisocyanate.

Included within the preferred isocyanates are those modified MDI's containing carbodiimide, allophanate, urethane or isocyanurate structures. The more preferred isocyanates are polymeric MDI and mixtures of polymeric MDI and pure 2,4 and 4,4' MDI. These polyisocyanates are prepared by conventional methods known in the art, e.g. phosgenation of the corresponding organic amine.

For purposes of the present invention isocyanates other than the preferred isocyanates may be present in minor amounts.

In the preparation of the polyurethanes used in the present invention the isocyanate is reacted with active hydrogencontaining compounds selected from aliphatic glycols, dihydroxy aromatics, bisphenols, hydroxyl terminated polyoxyalkylene polyols, polyesters, polyacetals and mixtures thereof. Hydroxyl group-containing compounds (polyols) useful in the preparation of polyurethanes are described in the Polyurethane Handbook in chapter 3, §3.1 pages 42-61; and in Polyurethanes: Chemistry and Technology in chapter II, §III and IV, pages 32-47.

Suitable polyols among the above may be found in the above references and in many patents, for example in columns 2 and 3 of U.S. Patent 3,652,639; columns 2-6 of U.S. Patent 4,421,872; and columns 4-6 of U.S. Patent 4,310,632.

Preferably used are hydroxyl-terminated polyoxyalkylene polyols. The former are generally prepared by well known methods, for example by the base catalyzed addition of an alkylene oxide, preferably ethylene oxide (oxirane), propylene oxide (methyloxirane) or butylene oxide (ethyloxirane) to an initiator molecule containing on the average two or more active hydrogens. Examples of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkylphenylenediamines, mono-, di, and trialkanolamines; tetrahydric initiators such as ethylene diamine, propylene diamine, 2,4'-, 2,2'-, and 4,4'-methylenedianiline, toluenediamine, and pentaerythritol; pentahydric initiators such as diethylenetriamine; and hexahydric and octahydric initiators such as sorbitol and sucrose.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and Technology as well as in many patents, for example U.S. Patents 1,922,451; 2,674,619; 1,922,459; 3,190,927; and 3,346,557.

Polyester polyols also represent polyurethane-forming reactants. Such polyesters are well known in the art and are prepared simply by polymerizing polycarboxylic acids or their derivatives, for example their acid chlorides or anhydrides, with a polyol. Numerous polycarboxylic acids are suitable, for example malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example the various aliphatic glycols, trimethylolpropane and trimethylolethane, a-methylglucoside, and sorbitol. Also suitable are low molecular weight polyoxyalkylene glycols such as polyoxyethyene glycol, polyoxypropylene glycol, and block and heteric polyoxyethylenepolyoxypropylene glycols. These lists of dicarboxylic acids and polyols are illustrative only, and not limiting. An excess of polyol should be used to ensure hydroxyl termination. Although carboxyl groups are also reactive with isocyanates. Methods of preparation of such polyester polyols are given in the Polyurethane Handbook and in Polyurethanes: Chemistry and Technology.

These polyols may be used alone or in combination. However, the use of graft polymer dispersions either alone or in combination is not contemplated by this invention. Those polyols or mixtures of polyols selected should promote a high crosslink density for optimal results.

Any suitable catalyst or mixture of catalysts may be used including tertiary amines such as, for example, triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylamino-propyldiethylamine and dimethylbenzylamine. Other suitable catalysts are, for example, stannous chloride, dibutyltin-di-2-ethyl hexonate, potassium hexanoate, stannous oxide, as well as other organometallic compounds such as are disclosed in U.S. Patent No. 2,846,408.

A surface-active agent is generally necessary for production of high grade polyurethane foam according to the present invention, since in the absence of same, the foams collapse or contain very large uneven cells. Numerous surface-active agents have been found satisfactory. Nonionic surface active agents are preferred. Of these, the nonionic surface-active agents such as the well-known silicones have been found particularly desirable. Other surface-active agents which are operative, although not preferred, include polyethylene glycol ethers of long chain alcohols, tertiary amine or alkanol amine salts of long chain alkyl acid sulfate esters, alkyl sulfonic esters, and alkyl arylsulfonic acids.

A chain extender and/or crosslinker is used as well in the present invention. These include those compounds having at least two functional groups bearing active hydrogen atoms such as, hydrazine, primary and secondary diamines, amino alcohols, amine acids, hydroxy acids, glycols or mixtures thereof. Glycerin is an example of a preferred compound used as a crosslinker.

Other optional additives which fall within the spirit of the present invention include known pigments, such as carbon black, dyes, stabilizers against aging and weathering, fungistats, bacteriostats, fillers, or flame retarding agents.

If desired, flame retardants may be incorporated in the foams. Among the flame retardants which may be employed are: pentabromodiphenyl oxide, dibromopropanol, tris(β-chloropropyl)phosphate, 2,2-bis(bromoethyl) 1,3-propanediol, tetrakis(2-chloroethyl)-ethylene diphosphate, tris(2,3-dibromopropyl)phosphate, tris(β-chloroethyl) phosphate, tris(1,2-dichloropropyl)-phosphate, bis-(2-chloroethyl) 2-chloroethyl-phosphonate, molybdenum trioxide, ammonium molybdate, ammonium phosphate, pentabromodiphenyl oxide, tricresylphosphate, hexabromocyclododecane and dibromoethyl dibromocyclohexane.

The following illustrate the nature of the invention. All parts are weight & unless otherwise indicated.

Examples 1-4 and comparative example A were prepared using the following conditions:

| Processing Conditions | |
|---|---|
| Machine | High Pressure |
| Component Temp | |
| Resin °C. | 25(77°F) |
| Isocyanate °C. | 25(77°F) |
| Mixing Pressure | |
| Resin (bar) | 180 |
| Isocyanate (bar) | 180 |
| Throughput g/sec | 175 |
| Mold Temperature °C. | 38 ± 3(100 ± 5°F) |
| Mold Release | Wax base release agent* |
| Processing Mode | Open Mold |
| | Pour |
| Demold Time min | ≈3 |

| | |
|---|---|
| *Silicone was used, as the mold release for comparative examples A and B. | |

Examples 1-3 and Comparative example A and B were injected into the center of a preheated (25 x 25 x 6.5 cm)(10x10x2.5') mold. The mold was closed. The parts were demolded, cured at 50% humidity and -5°C (23°F) prior to testing. Foam compression testing (ASTM D-1621) at 10 percent intervals was carried out on all examples at varying full weights, to determine foam performance characteristics. Comparative example A is a currently used energy absorbing foam composition using Freon F-11a (a chlorinated fluorocarbon). Comparative example B is a formulation similar to comparative example A however water is substituted for F-11a.

Although these parts were made using an open mold pour technique, the system is equally amenable to other fabrication methods known to those skilled in the art, e.g. RIM (reaction injection molding).

| | |
|---|---|
| Polyol A | was a propylene oxide adduct of a sucrose/dipropylene glycol mixed initiator, having a molecular weight of about 620 and a hydroxyl number of about 397. |
| Polyol B | was a propylene oxide adduct of ethylene diamine having a molecular weight of about 293, and a hydroxyl number of 767. |
| Polyol C | was a propylene oxide adduct of a mixture of toluene diamine isomers containing predominantly vicinal isomers, having a molecular weight of about 570 and a hydroxyl number of about 390. |
| Polyol D | was a propylene oxide adduct of propylene glycol containing 50 percent of 2.1 acrylonitrile/ styrene, having a hydroxyl number of about 69. |
| DC 193 | was a silicone surfactant sold by Dow Coming. |
| TEGOSTAB B-4113 | was a silicone surfactant sold by Goldschmidt. |
| NIAX L-540 | was a silicone surfactant sold by Union Carbide. |
| NIAX C-174 | was an amine catalyst sole by Union Carbide. |
| DABCO R-8020 | was an amine catalyst sold by Air Products. |
| DABCO 33LV | was an amine catalyst sold by Air Products. |
| POLYCAT 5 | was an amine catalyst sold by Air Products. |
| HexChem 977 | was an organometallic catalyst, potassium octoate, in dipropylene glycol. |
| FOMREZ UL-1 | was a tin catalyst sold by Fomrez Corp. |
| F11A | was a chlorinated fluorocarbon sold by Dupont Corporation. |
| Iso A | was a polymeric polymethylene polyphenyl isocyanate having a functionality of about 2.7. |

All reported test values are averages of multiple testing on each sample.

| Examples | | | | | |
|---|---|---|---|---|---|
| Resin Component | 1 | 2 | 3 | A | B |
| Polyol A | 82.5 | 83.39 | --- | --- | --- |
| Polyol B | --- | --- | 67.0 | --- | --- |
| Polyol C | --- | --- | --- | 21.56 | 29.29 |
| Polyol D | --- | --- | --- | 30.81 | 41.84 |
| DC-193 | 0.41 | 0.41 | --- | --- | --- |
| Tegostab B-4113 | -- | --- | 0.4 | --- | --- |
| Niax L-540 | --- | --- | --- | 0.49 | 1.25 |
| Niax C-174 | --- | --- | --- | --- | 2.1 |
| DABCO R-8020 | --- | --- | --- | 0.92 | --- |
| DABCO 33LV | --- | --- | 0.6 | --- | --- |
| Polycat 5 | 0.5 | 0.5 | --- | --- | --- |
| Hexchem 977 | 0.83 | 0.83 | 2.0 | --- | --- |
| Fomrez UL-1 | --- | --- | --- | 0.02 | --- |
| Glycerin | 8.26 | 8.26 | 15.0 | 9.24 | 12.55 |
| Water | 7.44 | 6.61 | 15.0 | --- | 12.55 |
| F-11A | --- | --- | --- | 36.96 | --- |

| Isocyanate Component | | | | | |
|---|---|---|---|---|---|
| Iso A | 200 | 200 | 200 | 89.3 | 119.5 |

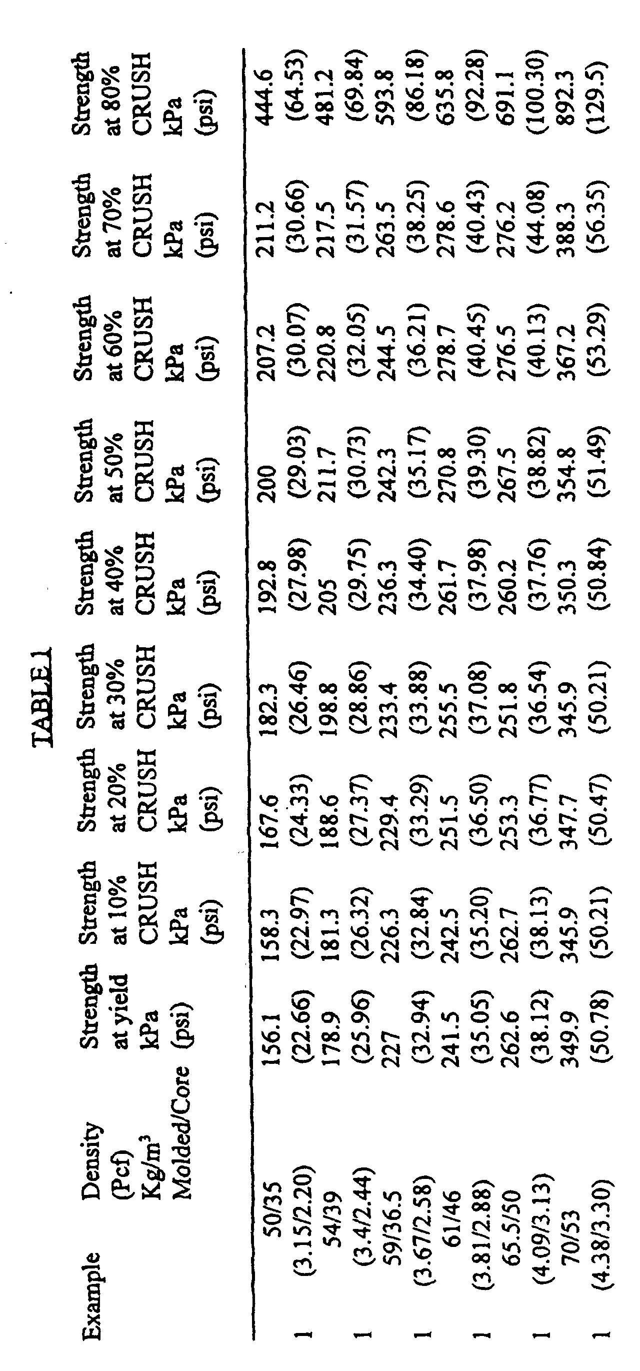

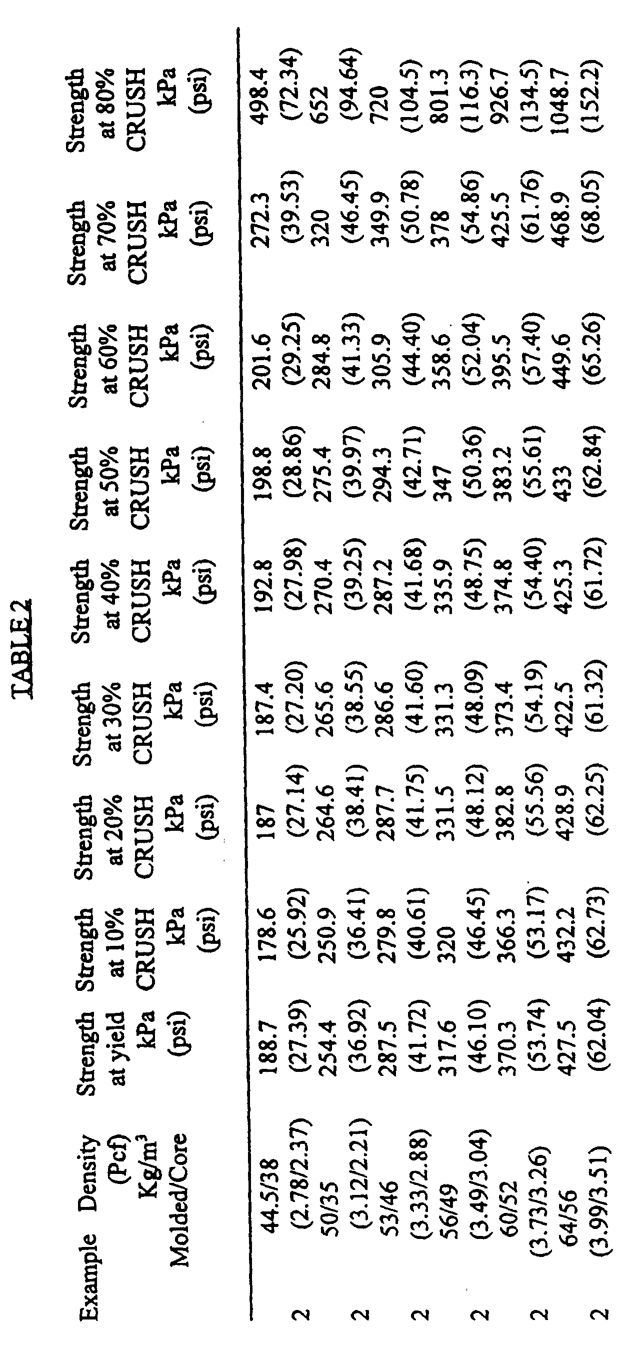

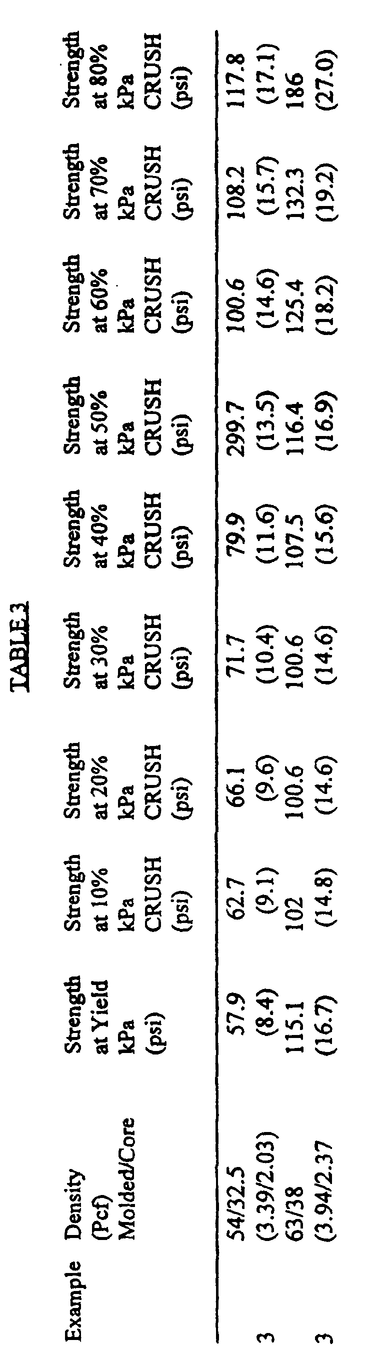

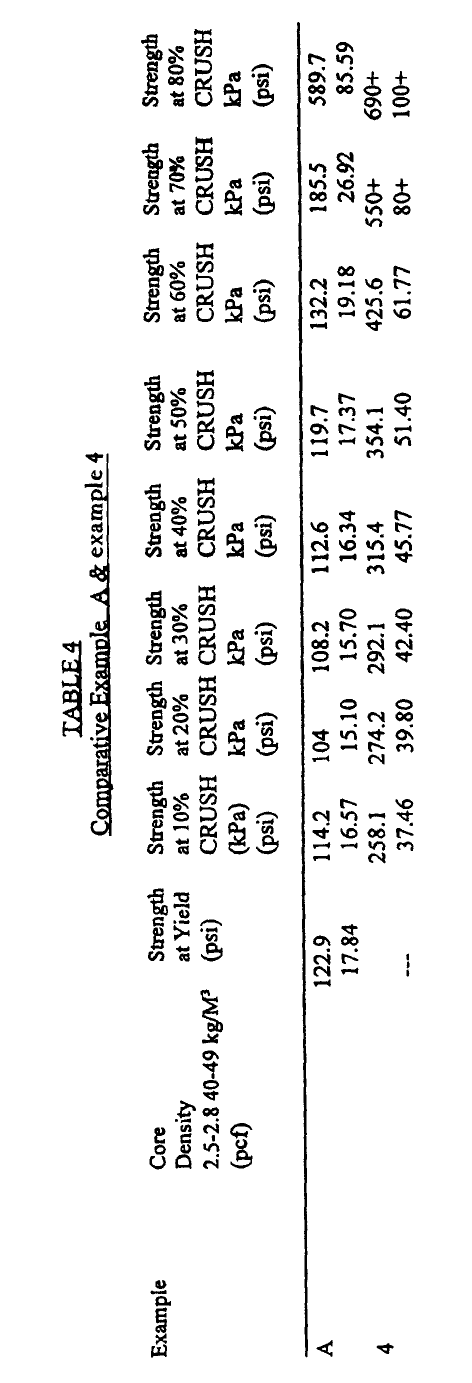

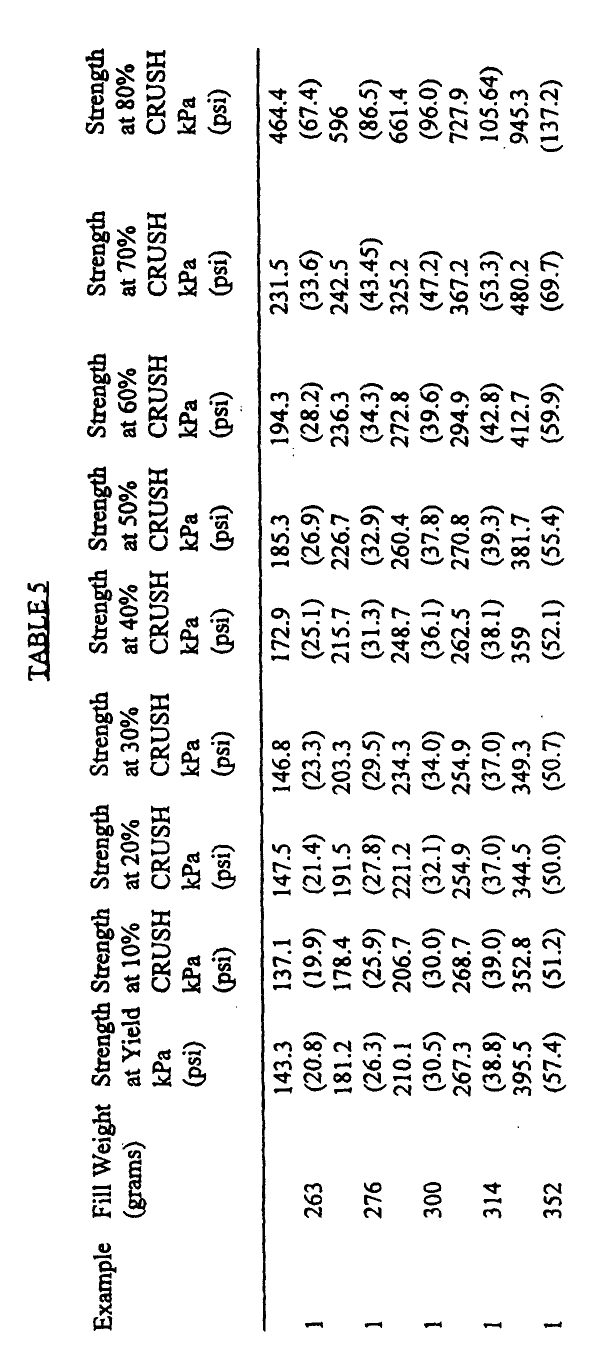

Examples 1, 2 and 3 illustrate the present invention. Examples 1 and 2 are prepared using the same formulation with different amounts of water present. The resulting foams exhibit the desired characteristics of the invention, i.e. a relatively constant consistency of compressive strength or crush strength, over deflection (ASTM D-1621). This consistency of campressive strength is carried over a range of densities as shown in tables 1 and 2. Example 3 illustrates that energy absorbing rigid foams are possible by adjusting the amount of water necessary to produce foams having the desired physical characteristics.

Table 3 shows the results of ASTMD-1621 foam compression tests for foams produced from example 3.

Table 4 shows the results of ASTM D-1621 foam compression test for comparative example A and B. As is evident from the data merely substituting water (Ex.B) for a chlorinated fluorocarbon (Ex.B) in a formulation produces a foam which exhibits a significant consistency of compressive strength over deflection.

Table 5 shows test data from a prototype hip bolster part, covering the range of 20 to 50 psi by varying the fill weight. The hip bolster was prepared using the formulation from example 1. All conditions were the same as those for examples 1 through 3 with the exception that a hip bolster mold was used.

## Claims

1. A method of preparing a side impact bolster for automotive applications comprising an energy absorbing rigid polyurethane foam, comprising:
A) reacting in a closed, preheated, prepared mold a formulation capable of producing a open-celled energy absorbing foam, comprising:
i) a compound containing isocyante reactive hydroxyl groups selected from the group consisting of aliphatic glycols, dihydroxy aromatics, bisphenols, hydroxyl terminated polyoxyalkylene polyols, polyesters, polyacetals, and mixtures thereof,
ii) an organic isocyanate selected from the group consisting of 4,4'-diphenylmethane diisocyanate, mixtures of 4,4'- and 2,4-diphenylmethane diisocyante, polymethylene polyphenylene polyisocyanate, modified diphenylmethane diisocyanates and mixtures thereof, wherein other organic isocyanates may be present in minor amounts;
iii) a catalyst,
iv) from 2 to 30% water present so as to be sufficient to act as a blowing agent and a cell opening agent,
v) a surfactant, and
vi) a cross-linker,
B) demolding and curing said foam, wherein the cured foam has a molded density of from 32 kg/m³ (2.0 pcf) to 72 kg/m³ (4.5 pcf) and exhibits a steady increase of the compressive strength with deflection as this increases from 10% to 70% deflection, the compressive strength being measured according to ASTM D-1621.

2. A method as claimed in claim 1, wherein the compound containing isocyanate reactive groups is a hydroxyl-terminated polyoxyalkylene polyol.

3. A method as claimed in claim 1, wherein the compound containing isocyanate reactive groups is a propylene oxide adduct of a sucrose/dipropylene glycol mixed initiator having a molecular weight of 620 and a hydroxyl number of 400.

4. A method as claimed in claim 1, 2 or 3, wherein the isocyanate is a polymeric polymethylene polyphenylisocyanate.

5. A method as claimed in claim 1, 2, 3 or 4, wherein the surfactant is a silicone surfactant.

6. A method as claimed in claim 1, 2, 3, 4 or 5, wherein the crosslinker is glycerin.

7. A method as claimed in claim 1, 2, 3, 4, 5, or 6, wherein water is present in amounts from 6 wt.% to 15 wt.%.

8. A side impact bolster for automotive applications comprising an energy absorbing rigid polyurethane foam, comprising the reaction product of:
A) a compound containing isocyanate reactive hydroxyl groups selected from the group consisting of aliphatic glycols, dihydroxy aromatics, bisphenols, hydroxyl terminated polyethers, polyesters, polyacetals and mixtures thereof,
B) an organic isocyanate selected from the group consisting of 4,4'-diphenyl-methane diisocyanate, polymethylene polyphenylene polyisocyanate, modified diphenylmethane diisocyanates, and mixtures thereof, wherein other organic isocyanates may be present in minor amounts,
C) a catalyst,
D) from 2 to 30% of a blowing agent consisting of water, wherein the water is present in amounts sufficient to cause formation of a predominantly open cell foam, without causing collapse,
E) a surfactant, and
F) a cross linker,
wherein said reaction product has a molded density of from 32 kg/m³ (2.0 pcf) to 72 kg/m³ (4.5 pcf) and exhibits a steady increase of the compressive strength with deflection as this increases from 10% to 70% deflection, the compressive strength being measured according to ASTMD-1621.

9. A bolster as claimed in claim 8, wherein the compound containing isocyanate reactive hydroxyl groups is a hydroxyl-terminated polyoxylalkylene polyol.

10. A bolster as claimed in claim 8, wherein the compound containing the isocyanate reactive group is a propylene oxide adduct of a sucrose/dipropylene glycol mixed initiator having a molecular weight of 620 and a hydroxyl number of 400.

11. A bolster as claimed in claim 8, 9 or 10, wherein the isocyanate is a polymeric polymethylene polyphenyl isocyanate.

12. A bolster as claimed in claim 8, 9, 10 or 11, wherein the surfactant is a silicone surfactant.

13. A bolster as claimed in claim 8, 9, 10, 11 or 12, wherein the crosslinker is a glycerin.

14. A bolster as claimed in claim 8, 9, 10, 11, 12 or 13, wherein the water is present in amounts from 6 wt.% to 15 wt.%.

## Patentansprüche

1. Verfahren zur Herstellung eines Seitenaufprallschutzes für Automobilanwendungen, zumindest teilweise bestehend aus einem energieabsorbierenden Polyurethan-Hartschaumstoff, bei dem man:
A) in einer geschlossenen, vorgeheizten, vorbereiteten Form eine zur Erzeugung eines offenzelligen energieabsorbierenden Schaumstoffs befähigte Formulierung, enthaltend:
i) eine gegenüber Isocyanat reaktive Hydroxylgruppen enthaltende Verbindung aus der Gruppe bestehend aus aliphatischen Glykolen, Dihydroxyaromaten, Bisphenolen, hydroxylgruppenterminierten Polyoxyalkylenpolyolen, Polyestern, Polyacetalen und deren Gemischen,
ii) ein organisches Isocyanat aus der Gruppe bestehend aus 4,4'-Diphenylmethandiisocyanat, Gemischen aus 4,4'- und 2,4-Diphenylmethandiisocyanat, Polymethylenpolyphenylenpolyisocyanat, modifizierten Diphenylmethandiisocyanaten und deren Gemischen, wobei auch andere organische Isocyanate in geringen Mengen vorhanden sein können;
iii) einen Katalysator,
iv) 2 Gew.-% bis 30 Gew.-% Wasser, das in solchen Mengen vorliegt, daß es als Treibmittel und Zellöffner wirkt,
v) eine oberflächenaktive Substanz und
vi) einen Vernetzer,
zur Reaktion bringt und
B) den Schaumstoff entformt und härtet, wobei der gehärtete Schaumstoff eine Formdichte von 32 kg/m³ (2,0 pcf) bis 72 kg/m³ (4,5 pcf) und eine Stauchhärte gemäß ASTM D-1621, die mit ansteigender Verformung von 10 % auf 70 % stetig zunimmt, aufweist.

2. Verfahren nach Anspruch 1, bei dem man als gegenüber Isocyanat reaktive Gruppen enthaltende Verbindung ein hydroxylgruppenterminiertes Polyoxyalkylenpolyol einsetzt.

3. Verfahren nach Anspruch 1, bei dem man als gegenüber Isocyanat reaktive Gruppen enthaltende Verbindung ein Propylenoxidaddukt eines Saccharose/Dipropylenglykol-Startergemischs mit einem Molekulargewicht von 620 und einer Hydroxylzahl von 400 einsetzt.

4. Verfahren nach Anspruch 1, 2 oder 3, bei dem man als Isocyanat ein polymeres Polymethylenpolyphenylisocyanat einsetzt.

5. Verfahren nach Anspruch 1, 2, 3 oder 4, bei dem man als oberflächenaktive Substanz ein Silikontensid einsetzt.

6. Verfahren nach Anspruch 1, 2, 3, 4 oder 5, bei dem man als Vernetzer Glycerin einsetzt.

7. Verfahren nach Anspruch 1, 2, 3, 4, 5 oder 6, bei dem man Wasser in einer Menge von 6 Gew.-% bis 15 Gew.-% einsetzt.

8. Seitenaufprallschutz für Automobilanwendungen, zumindest teilweise bestehend aus einem energieabsorbierenden Polyurethan-Hartschaumstoff, enthaltend das Umsetzungsprodukt von:
A) einer gegenüber Isocyanat reaktive Hydroxylgruppen enthaltenden Verbindung aus der Gruppe bestehend aus aliphatischen Glykolen, Dihydroxyaromaten, Bisphenolen, hydroxylgruppenterminierten Polyethern, Polyestern, Polyacetalen und deren Gemischen,
B) einem organischen Isocyanat aus der Gruppe bestehend aus 4,4'-Diphenylmethandiisocyanat, Polymethylenpolyphenylenpolyisocyanat, modifizierten Diphenylmethandiisocyanaten und deren Gemischen, wobei auch andere organische Isocyanate in geringen Mengen vorhanden sein können,
C) einem Katalysator,
D) 2 Gew.-% bis 30 Gew.-% Wasser als Treibmittel, wobei das Wasser in solchen Mengen vorliegt, daß ein überwiegend offenzelliger Schaumstoff gebildet wird, der nicht zusammenfällt,
E) einer oberflächenaktiven Substanz und
F) einem Vernetzer,
wobei das Umsetzungsprodukt eine Formdichte von 32 kg/m³ (2,0 pcf) bis 72 kg/m³ (4,5 pcf) und eine Stauchhärte gemäß ASTM D-1621, die mit ansteigender Verformung von 10 % auf 70 % stetig zunimmt, aufweist.

9. Seitenaufprallschutz nach Anspruch 8, bei dem es sich bei der gegenüber Isocyanat reaktive Hydroxylgruppen enthaltenden Verbindung um ein hydroxylgruppenterminiertes Polyoxyalkylenpolyol handelt.

10. Seitenaufprallschutz nach Anspruch 8, bei dem es sich bei der die gegenüber Isocyanat reaktive Gruppe enthaltenden Verbindung um ein Propylenoxidaddukt eines Saccharose/Dipropylengykol-Startergemischs mit einem Molekulargewicht von 620 und einer Hydroxylzahl von 400 handelt.

11. Seitenaufprallschutz nach Anspruch 8, 9 oder 10, bei dem es sich bei dem Isocyanat um ein polymeres Polymethylenpolyphenylisocyanat handelt.

12. Seitenaufprallschutz nach Anspruch 8, 9, 10 oder 11, bei dem es sich bei der oberflächenaktiven Substanz um ein Silikontensid handelt.

13. Seitenaufprallschutz nach Anspruch 8, 9, 10, 11 oder 12, bei dem es sich bei dem Vernetzer um Glycerin handelt.

14. Seitenaufprallschutz nach Anspruch 8, 9, 10, 11, 12 oder 13, bei dem das Wasser in einer Menge von 6 Gew.-% bis 15 Gew.-% vorliegt.

## Revendications

1. Procédé pour préparer un élément de soutien de protection latérale pour des applications automobiles comprenant mousse de polyuréthanne rigide absorbant l'énergie, comprenant le fait de:
A) faire réagir dans un moule préparé, préchauffé, fermé, une formulation capable de produire une mousse absorbant l'énergie à alvéoles ouvertes, comprenant:
i) un composé contenant des groupes hydroxyle aptes à réagir vis-à-vis d'isocyanates, choisis parmi le groupe constitué par des glycols aliphatiques, des composés aromatiques dihydroxylés, des bisphénols, des polyoxyalkylènepolyols terminés par des groupes hydroxyle, des polyesters, des polyacétals et leurs mélanges,
ii) un isocyanate organique choisi parmi le groupe constitué par le 4,4'-diphénylméthanediisocyanate, des mélanges du 4,4'- et du 2,4-diphényl-méthanediisocyanate, du polyméthylène-polyphénylènepolyisocyanate, des diphénylméthane-diisocyanates modifiés et leurs mélanges, dans lequel d'autres isocyanates organiques peuvent être présents dans des quantités mineures,
iii) un catalyseur,
iv) de l'eau présente en une quantité à concurrence de 2 à 30%, suffisante pour faire office d'agent gonflant et d'agent d'ouverture des alvéoles,
v) un agent tensioactif, et
vi) un agent de réticulation,
B) démouler et durcir ladite mousse, dans lequel la mousse durcie possède une densité à l'état moulé de 32 kg/m³ (2,0 pcf) à 72 kg/m³ (4,5 pcf) et manifeste une augmentation constante de la résistance à la compression au fur et à mesure que le fléchissement augmente de 10% à 70%, la résistance à la compression étant mesurée conformément à la norme ASTM D-1621.

2. Procédé selon la revendication 1, dans lequel le composé contenant des groupes aptes à réagir vis-à-vis d'isocyanates est un polyoxyalkylènepolyol terminé par un groupe hydroxyle.

3. Procédé selon la revendication 1, dans lequel le composé contenant des groupes aptes à réagir vis-à-vis d'isocyanates est un adduit d'oxyde de propylène d'un initiateur mixte de sucrose/dipropylèneglycol possédant un poids moléculaire de 620 et un indice d'hydroxyle de 400.

4. Procédé selon la revendication 1, 2 ou 3, dans lequel l'isocyanate est un polyméthylènepolyphénylisocyanate polymère.

5. Procédé selon la revendication 1, 2, 3 ou 4, dans lequel l'agent tensioactif est un agent tensioactif à base de silicone.

6. Procédé selon la revendication 1, 2, 3, 4 ou 5, dans lequel l'agent de réticulation est le glycérol.

7. Procédé selon la revendication 1, 2, 3, 4, 5 ou 6, dans lequel l'eau est présente dans des quantités de 6% en poids à 15% en poids.

8. Elément de soutien de protection latérale pour des applications automobiles comprenant une mousse de polyuréthanne rigide absorbant l'énergie, comprenant le produit de réaction de:
A) un composé contenant des groupes hydroxyle aptes à réagir vis-à-vis d'isocyanates, choisis parmi le groupe constitué par des glycols aliphatiques, des composés aromatiques dihydroxylés, des bisphénols, des polyéthers terminés par des groupes hydroxyle, des polyesters, des polyacétals et leurs mélanges,
B) un isocyanate organique choisi parmi le groupe constitué par le 4,4'-diphénylméthanediisocyanate, le polyméthylène-polyphénylènepolyisocyanate, des diphénylméthane-diisocyanates modifiés et leurs mélanges, dans lequel d'autres isocyanates organiques peuvent être présents dans des quantités mineures,
C) un catalyseur,
D) à concurrence de 2 à 30%, un agent gonflant constitué d'eau, dans lequel l'eau est présente dans des quantités suffisantes pour donner lieu à la formation d'une mousse principalement à alvéoles ouvertes sans donner lieu à un affaissement,
E) un agent tensioactif, et
F) un agent de réticulation,
dans lequel ledit produit de réaction possède une densité à l'état moulé de 32 kg/m³ (2,0 pcf) à 72 kg/m³ (4,5 pcf) et manifeste une augmentation constante de la résistance à la compression au fur et à mesure que le fléchissement augmente de 10% à 70%, la résistance à la compression étant mesurée conformément à la norme ASTM D-1621.

9. Elément de soutien selon la revendication 8, dans lequel le composé contenant des groupes hydroxyle aptes à réagir vis-à-vis d'isocyanates est un polyoxyalkylènepolyol terminé par un groupe hydroxyle.

10. Elément de soutien selon la revendication 8, dans lequel le composé contenant des groupes aptes à réagir vis-à-vis d'isocyanates est un adduit d'oxyde de propylène d'un initiateur mixte de sucrose/dipropylèneglycol possédant un poids moléculaire de 620 et un indice d'hydroxyle de 400.

11. Elément de soutien selon la revendication 8, 9 ou 10, dans lequel l'isocyanate est un polyméthylènepolyphénylisocyanate polymère.

12. Elément de soutien selon la revendication 8, 9, 10 ou 11, dans lequel l'agent tensioactif est un agent tensioactif à base de silicone.

13. Elément de soutien selon la revendication 8, 9, 10, 11 ou 12, dans lequel l'agent de réticulation est le glycérol.

14. Elément de soutien selon la revendication 8, 9, 10, 11, 12 ou 13, dans lequel l'eau est présente dans des quantités de 6% en poids à 15% en poids.
